# EUROPÄISCHE PATENTANMELDUNG

(11) **EP 0 532 101 A2**
(43) Veröffentlichungstag der Anmeldung: **17.03.1993**
(21) Anmeldenummer: 92202705.7
(22) Anmeldetag: 08.09.1992
(51) Int. Cl.: H04Q 7/04, H04M 1/72

(54) **Mobilfunkgerät**

(30) Priorität: 10.09.1991 DE 4130001
(71) Anmelder: Philips Patentverwaltung GmbH, 22335 Hamburg (DE); Philips Electronics N.V., 5621 BA Eindhoven (NL)
(72) Erfinder: Walters, Eckhard, c/o Philips, W-2000 Hamburg 1 (DE)
(74) Vertreter: Volmer, Georg, Dipl.-Ing.

(57) **Zusammenfassung**

Die Erfindung bezieht sich auf ein Mobilfunkgerät mit einem Sende- und Empfangsteil (1) zur Verarbeitung von Funksignalen und mit einer Schaltung (2) zur Basisbandverarbeitung, die zur Übertragung von Signalen über ein Bussystem zu einem Bediengerät vorgesehen ist. Die Schaltung (2) zur Basisbandverarbeitung und das Bediengerät sind über ein nach einem ISDN-Standard arbeitendes Bussystem (9) zur Übertragung von Steuer- und Datensignalen gekoppelt.

## Beschreibung

Die Erfindung bezieht sich auf ein Mobilfunkgerät mit einem Sende- und Empfangsteil zur Verarbeitung von Funksignalen und mit einer Schaltung zur Basisbandverarbeitung, die zur Übertragung von Signalen über ein Bussystem zu einem Bediengerät vorgesehen ist.

Ein solches Mobilfunkgerät ist aus der DE-C2-38 06 473 bekannt. Dieses enthält ein Bedieneingerät, ein Sende- und Empfangsgerät und einen Adapter zum Austausch von Signalen zwischen Bedieneinrichtung und dem Sende- und Empfangsgerät. Ein Sende- und Empfangsgerät weist in der Regel einen Sende- und Empfangsteil zur Verarbeitung von Funksignalen und eine Schaltung zur Basisbandverarbeitung auf. Der Adapter enthält einen Mikroprozessor und verschiedene Schnittstellen. Über eine solche Schnittstelle ist der Adapter noch mit einer Workstation gekoppelt. Der Mikroprozessor dient zum Mithören und Einschleifen in die Kommunikation zwischen Sende- und Empfangsgerät und Bediengerät und steuert die Weitergabe von Daten der Workstation. Ferner sind noch serielle Schnittstellen zwischen Adapter und Bedieneingerät bzw. Sende- und Empfangsgerät vorhanden, über die Meldungen und Befehle übertragen werden.

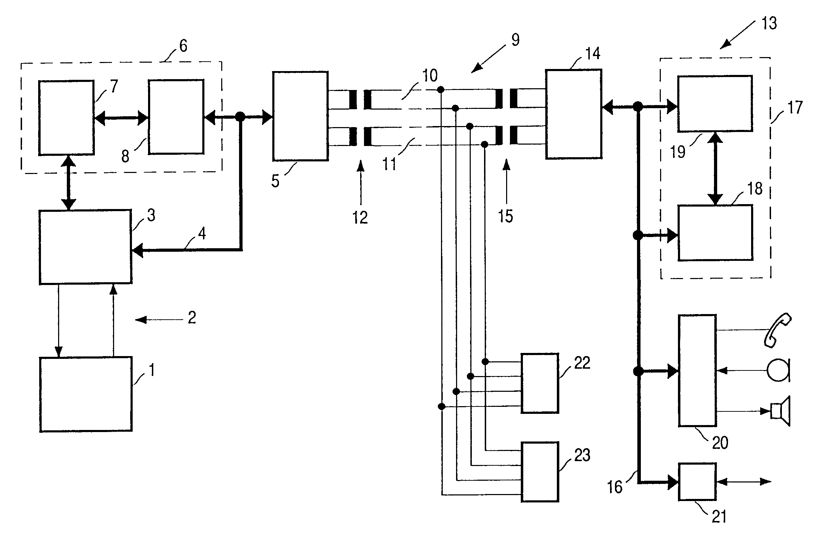

Aus der Veröffentlichung "Architektur eines Mobilfunkgerätes für das Netz D" von P. Schöffel, W. Koch, W. Rosenkranz und J. Weith, Philips Innovation 1/1991, Seiten 132 bis 139, ist ein weiteres Mobilfunkgerät bekannt. Dieses weist einen Sende- und Empfangsteil (Transceiver), eine Schaltung zur Basisbandverarbeitung, eine Gerätesteuerung und einen Bedienhörer auf. Das als elektrisches Signal vorliegende Sprachsignal wird zwischen der Schaltung zur Basisbandverarbeitung und dem Bedienhörer über ein PCM-Bussystem übertragen (vgl. Bild 5, Seite 135). Ein solches PCM-Bussystem zur Verwendung in einem Mobilfunkgerät ist bisher noch nicht standardisiert. Zur Entwicklung eines solchen Bussystems sind hohe Entwicklungskosten erforderlich, da ein solches Bussystem beispielsweise auch zum Anschluß von Faksimile-Geräten geeignet sein muß. Steuersignale beispielsweise werden bei diesem Mobilfunkgerät über andere Leitungen übertragen.

Der Erfindung liegt daher die Aufgabe zugrunde, ein Mobilfunkgerät zu schaffen, in welchem zwischen der Schaltung zur Basisbandverarbeitung und dem Bediengerät Daten auf einfache Weise übertragen werden.

Die Aufgabe wird bei einem Mobilfunkgerät der eingangs genannten Art dadurch gelöst, daß die Schaltung zur Basisbandverarbeitung und das Bediengerät über ein nach einem ISDN-Standard arbeitendes Bussystem zur Übertragung von Steuer- und Datensignalen gekoppelt sind.

Zur Kopplung des Bediengerätes mit der Schaltung zur Basisbandverarbeitung ist ein Bussystem vorgesehen, welches nach dem ISDN-Standard arbeitet. Über das S-Bussystem werden Sprachsignale und Steuerinformationen übertragen. Unter einem Bediengerät soll auch ein Bedienhörer verstanden werden, der ein Mikrofon und einen Lautsprecher enthält. Unter dem Begriff "ISDN" ist ein dienstintegriertes digitales Nachrichtennetz zu verstehen, über welches unterschiedliche Fernmeldedienste abgewickelt werden können. Im Teilnehmeranschlußbereich eines solchen Netzes können eine Mehrzahl von Teilnehmerendgeräten über ein Bussystem, welches als S-Bussystem bezeichnet wird, gekoppelt werden. Jedes Teilnehmergerät ist dabei über eine SO-Schnittstelle mit dem S-Bussystem gekoppelt. Für die Übertragung schmalbandiger Nachrichten (Sprache, Daten-, Textkommunikation usw.) stehen zwei B-Kanäle mit jeweils einer Kapazität von 64 KBit/s zur Verfügung. Als Signalisierungskanal zur Übertragung vermittlungstechnischer Informationen ist ein D-Kanal mit 16 KBit/s vorgesehen.

Durch die Verwendung eines S-Bussystems zwischen Bediengerät und Schaltung zur Basisbandverarbeitung sind keine hohen Entwicklungskosten notwendig, da hochintegrierte Schnittstellenbausteine verfügbar sind. Die Steuerinformationen, welche über den D-Kanal ausgetauscht werden, sind spezifiziert. Die Sprachdaten werden über die B-Kanäle und Tasten-, Display- und andere Steuerinformationen können wahlweise über den D- oder die B-Kanäle übertragen werden. Des weiteren sind auch hochintegrierte Bausteine vorhanden, die mit den Schnittstellenbausteinen zusammenarbeiten.

In dem Bediengerät ist ein mit einer SO-Schnittstelle gekoppelter erster Sende- und Empfangsbaustein vorhanden, welcher die Ober das S-Bussystem übermittelten Informationen über ein erstes geräteinternes Bussystem an wenigstens eine Umsetzerschaltung gibt. Die Umsetzerschaltung führt eine Analog-Digital-Umsetzung von analogen Sprachsignalen in digitale Sprachsignale und dann eine Codierung durch. Weiterhin setzt sie auch nach einer Dekodierung digitale Sprachsignale in einem Digital-Analog-Umsetzer in analoge Sprachsignale um. Mit dem ersten geräteinternen Bussystem ist auch eine erste Steuerschaltung gekoppelt, die zur Verarbeitung der D-Kanal-Informationen dient. Sie wertet empfangene D-Kanal-Informationen aus und erzeugt solche Informationen.

An das erste geräteinterne Bussystem ist ein Terminal-Adapter anschließbar, welcher eine Anpassung zwischen dem S-Bussystem und einer anderen Datenschnittstelle, z.B. V24-Schnittstelle, vornimmt.

Durch die Verwendung des S-Bussystems können auch andere nach dem ISDN-Standard arbeitende Geräte über jeweils eine SO-Schnittstelle an das S-Bussystem gekoppelt werden. Beispielsweise kann ein ISDN-Faksimile-Gerät oder auch ein ISDN-Standard-Telefon angeschlossen werden.

Die Schaltung zur Basisbandverarbeitung ist über ein zweites geräteinternes Bussystem mit einem zweiten Sende- und Empfangsbaustein gekoppelt. Der zweite Sende- und Empfangsbaustein weist eine Kopplung mit einer SO-Schnittstelle auf. Mit dem zweiten geräteinternen Bussystem ist noch eine zweite Steuerschaltung gekoppelt, welche D-Kanal-Informationen erzeugt und D-Kanal-Informationen auswertet. Eine solche zweite Steuerschaltung kann ebenso wie die erste Steuerschaltung einen Prozessor enthalten.

Ein Ausführungsbeispiel der Erfindung wird nachstehend anhand der Zeichnung näher erläutert. In der Fig. wird ein Blockschaltbild eines Teiles eines Mobilfunkgerätes gezeigt.

Das in der Fig. dargestellte Mobilfunkgerät weist einen Sende- und Empfangsteil 1 auf, der zur Erzeugung und zum Empfang von Funksignalen dient. Über eine Basisband-Schnittstelle 2 ist der Sende- und Empfangsteil 1 mit einer Schaltung 3 zur Basisbandverarbeitung verbunden. Eine solche Schaltung 3 kann z.B. aus einem Gate-Array oder einem digitalen Signalprozessor bestehen. Ein solcher digitaler Signalprozessor ist beispielsweise aus der Veröffentlichung "Ein GSM-Chipsatz der zweiten Generation" von J. Schuck, W. Rosenkranz, J. Weith und P. Schöffel, Mikroelektronik, Band 5, 1991, Heft 2, Seite 72 bis 77 bekannt.

Die Schaltung 3 zur Basisbandverarbeitung ist zur adaptiven Kanalentzerrung, Kanalkodierung bzw. - dekodierung, Verschlüsselung und Entschlüsselung und wenigstens noch zur Sprachkodierung und -dekodierung vorgesehen.

Die Schaltung 3 zur Basisbandverarbeitung ist über ein geräteinernes Bussystem 4 mit einem Sende- und Empfangsbaustein 5 und einer Steuerschaltung 6 verbunden. Die Steuerschaltung 6 enthält einen Mikroprozessor 7, der noch über ein anderes Bussystem mit der Schaltung 2 verbunden ist, und einen Kontrollbaustein 8. Der Mikroprozessor 7 und die Kontrollschaltung 8 sind untereinander noch über weitere Leitungen verbunden. Über das geräteinterne Bussystem 4 werden von der Schaltung 3 zur Basisbandverarbeitung Sprach- bzw. Dateninformationen über die beiden B-Kanäle dem Sende- und Empfangsbaustein 5 zugeführt. Die Steuerschaltung 6 liefert über den Kontrollbaustein 8 D-Kanal-Informationen. Die D-Kanal-Informationen wertet der Mikroprozessor 7 aus, und er sendet ebenfalls auch D-Kanal-Informationen zum Kontrollbaustein 8. Der Kontrollbaustein 8 dient zur Abnahme bzw. zur Einfügung der Informationen in den bzw. aus dem D-Kanal.

Tasten-, Display- und andere Steuerinformationen können entweder über einen D- oder B-Kanal übertragen werden.

Der Sende- und Empfangsbaustein 5 überträgt die B-Kanal- und D-Kanal-Informationen zwischen dem geräteinternen Bussystem 4 und einem S-Bussystem 9. Das S-Bussystem besteht aus einem Sendeadernpaar 10 und einem Empfangsadernpaar 11. Der Sende- und Empfangsbaustein 5 ist über eine SO-Schnittstelle mit den beiden Adernpaaren 10 und 11 über Übertrager 12 gekoppelt. Des weiteren ist mit dem S-Bussystem 9 ein Bediengerät 13 über eine SO-Schnittstelle gekoppelt. Als Bediengerät 13 kann ein Bedienhörer mit Bedienfunktionen verstanden werden oder eine Freisprecheinrichtung mit weiteren Einrichtungen, z.B. einem Terminal-Adapter.

Das Bediengerät 13 weist einen Sende- und Empfangsbaustein 14 auf, der über Übertrager 15 mit dem Sendeadernpaar 10 und dem Empfangsadernpaar 11 des S-Bussystems 9 gekoppelt ist. Der Sende- und Empfangsbaustein 14 überträgt die B-Kanal- und D-Kanal-Informationen zwischen dem S-Bussystem 9 und einem weiteren geräteinternen Bussystem 16. An das geräteinterne Bussystem 16 ist eine weitere Steuerschaltung 17 mit einem Mikroprozessor 18 und einem Kontrollbaustein 19 angeschlossen. Der Mikroprozessor 18 und der Kontrollbaustein 19 sind miteinander über weitere Leitungen gekoppelt. Mit dem geräteinternen Bussystem 16 ist noch eine Umsetzerschaltung 20 verbunden. Die Umsetzerschaltung 20 dient zur Analog-Digital-Umsetzung von über eine Mikrofonkapsel empfangenen analogen Sprachsignalen in digitale Signale und zur Codierung der digitalen Signale. Des weiteren dekodiert die Umsetzerschaltung 20 die von dem geräteinternen Bussystem 16 abgegebenen digitalen Signale und setzt die digitalen dekodierten Signale mittels eines Digital-Analog-Umsetzers in analoge Sprachsignale um, die über einen Lautsprecher abgegeben werden. Die Mikrofonkapsel oder der Lautsprecher können Bestandteil eines Hörers oder einer Freisprecheinrichtung sein.

An das geräteinterne Bussystem 16 ist noch ein ISDN-Terminal-Adapter 21 angeschlossen, welcher noch mit einer Datenschnittstelle, beispielsweise einer V24-Schnittstelle, verbunden ist. Der ISDN-Terminal-Adapter 21 nimmt eine Anpassung zwischen der Datenschnittstelle und dem geräteinternen Bussystem 16 vor.

Als Sende- und Empfangsbaustein 5 und 14, als Umsetzerschaltung 20, als ISDN-Terminal-Adapter 21 und als Steuerschaltung 6 und 17 mit den Kontrollbausteinen 8 und 19 und den Mikroprozessoren 7 und 18 können die aus der EP-A1-0 404 994 bekannten Schaltungselemente verwendet werden. An das S-Bussystem 9 kann des weiteren noch ein ISDN-Faksimile-Gerät 22 und ein ISDN-Standard-Telefon 23 angeschlossen werden.

Im folgenden wird anhand zweier Programmabläufe für die Übertragung von Steuerinformationen oder Daten die Arbeitsweise des Mikroprozessors 7 dargestellt. Als erstes ist ein Hauptprogramm aufgeführt, das durch einen Interrupt, d.h. ein Ereignis, unterbrochen werden kann. Ein solches Ereignis kann beispielsweise eine Meldung sein, die über den D-Kanal gemeldet wird.
1. Start des Hauptprogrammes;
2. Programmdaten werden initalisiert;
3. Eingaben vom Benutzer oder Meldungen von den Schaltungen werden eingeschrieben;
4. Ist der Zeiger "Neue Meldung" gesetzt?
5. Ja:
6. Die Daten werden ausgewertet;
7. Der Zeiger "Neue Meldung" wird zurückgesetzt;
8. weiter bei 11;
9. Nein:
10. weiter bei 11;
11. Ist der Zeiger "Senden erlaubt" gesetzt?
12. Nein:
13. weiter bei 3;
14. Ja:
15. Ist der Zeiger "Senden wiederholen" gesetzt?
16. Ja:
17. Die letzte Meldung noch einmal senden;
18. Es wird der Zeiger "Senden wiederholen" zurückgesetzt;
19. weiter bei 22;
20. Nein:
21. weiter bei 22;
22. Ist der Zeiger "Meldung läuft" gesetzt?
23. Ja:
24. weiter bei 3;
25. Nein:
26. Sind Daten zu senden?
27. Nein:
28. weiter bei 3;
29. Ja:
30. Die gespeicherten Daten werden gesendet;
31. Es wird der Zeiger "Meldung läuft" gesetzt;
32. weiter bei 3.

Nach dem Start des Hauptprogrammes (1.) werden die Programmdaten initialisiert (2.) und Eingaben vom Benutzer oder Meldungen von den Schaltungen werden eingeschrieben (3.). Sind Daten eingetroffen, d.h. der Zeiger "Neue Meldung" ist gesetzt, werden die Daten ausgewertet und der Zeiger "Neue Meldung" wird zurückgesetzt (5. bis 8.). Falls der Zeiger "Neue Meldung" nicht gesetzt ist, wird geprüft, ob der Zeiger "Senden erlaubt" gesetzt ist. Ist der Zeiger "Senden erlaubt" nicht gesetzt, wird zum Punkt 3 zurückgegangen (9. bis 13.). Im anderen Fall wird überprüft, ob der Zeiger "Senden wiederholen" gesetzt ist. Falls der Zeiger "Senden wiederholen" gesetzt ist, wird die D-Kanal-Information ausgegeben, daß die letzte Meldung noch einmal gesendet werden soll. Dann wird der Zeiger "Senden wiederholen" zurückgesetzt (14. bis 19.). Daraufhin wird als nächstes überprüft, ob der Zeiger "Meldung läuft" gesetzt ist. Ist er gesetzt, wird zum Punkt 3 zurückgesprungen (23. bis 24.). Im anderen Fall, wenn der Zeiger "Meldung läuft" nicht gesetzt ist, wird überprüft, ob noch Daten zu senden sind (25. bis 26.). Im anderen Fall werden die gespeicherten Daten gesendet und es wird der Zeiger "Meldung läuft" gesetzt. Danach wird zum Punkt 3 des Hauptprogrammes zurückgesprungen (29. bis 32.).

Das Hauptprogramm kann von einem Ereignis (Interrupt) unterbrochen werden. Im folgenden wir ein Programmablauf bei Eintreffen eines Ereignisses dargestellt. Ein solches Ereignis kann z.B. das Eintreffen von Daten (Schicht 2) oder eine physikalische Veränderung (Schicht 1) sein (Unterbrechung einer Leitung des S-Bussystems 9).
1. Ereignis ist erfolgt (Interrupt);
2. Welches Ereignis liegt vor?
3. Es liegt ein Ereignis der Schicht 1 vor:
4. Es wird der neue Zustand der Schicht 1 gespeichert;
5. Ist die Schicht 1 aufgebaut?
6. Ja:
7. Es wird der Zeiger "Senden erlaubt" gesetzt;
8. weiter bei 39;
9. Nein:
10. Ist die Schicht 1 abgebaut?
11. Ja:
12. Es wird der Zeiger "Senden erlaubt" zurückgesetzt";
13. weiter bei 39;
14. Nein:
15. weiter bei 39;
16. Es liegt eine Empfangs-Meldung der Schicht 2 vor:
17. Ist die Meldung fehlerfrei?
18. Nein:
19. weiter bei 29;
20. Ja:
21. Ist die Meldung eine Steuermeldung für die Schicht 2?
22. Ja:
23. Es wird der Zustand der Schicht 2 auf einen Anfangszustand zurückgesetzt;
24. weiter bei 29;
25. Nein:
26. Die Meldung wird zwischengespeichert;
27. Es wird der Zeiger "Neue Meldung" gesetzt;
28. weiter bei 29;
29. Der Empfangsspeicher wird für eine neue Meldung freigegeben;
30. weiter bei 39;
31. Es liegt eine Sende-Meldung der Schicht 2 vor;
32. Sind die Daten fehlerfrei gesendet worden?
33. Ja:
34. Es wird der Zeiger "Meldung läuft" zurückgesetzt;
35. weiter bei 39;
36. Nein:
37. Es wird der Zeiger "Senden wiederholen" gesetzt;
38. weiter bei 39;
39. Ende des Ereignisses.

Wenn ein Ereignis (Interrupt) erfolgt ist, wird überprüft, welches Ereignis vorliegt (1. bis 2.). Es können insgesamt drei Ereignisse auftreten. Es kann ein Ereignis der Schicht 1 auftreten eine Empfangs-Meldung der Schicht 2 eintreffen oder eine Sende-Meldung der Schicht 2 quittiert sein. Die Schicht 1 beschreibt die physikalischen Bedingungen einer Schnittstelle, die Leitungsstruktur, die Art der Übertragung, Speisung und Synchronisation und die Kanalstruktur. Die Schicht 2 legt die Datensicherung im D-Kanal und Teile der Adressierung fest.

Wenn ein Ereignis der Schicht 1 vorliegt (3.), wird der neue Zustand der Schicht 1 gespeichert (4.). Dann wird überprüft, ob die Schicht 1 aufgebaut ist, d.h. ob eine Sendemöglichkeit besteht. Wenn die Schicht 1 aufgebaut ist, wird der Zeiger "Senden erlaubt" gesetzt. Danach ist der Interrupt beendet (5. bis 8.). Im anderen Fall wird geprüft, ob die Schicht 1 abgebaut ist (9. bis 10.). Ist dies der Fall, wird der Zeiger "Senden erlaubt" zurückgesetzt und der Interrupt beendet (11. bis 13). In dem anderen Fall, wenn die Schicht 1 noch nicht abgebaut ist, wird ebenfalls der Interrupt beendet (14. bis 15.).

Wenn eine Emfpangs-Meldung der Schicht 2 vorliegt, wird überprüft, ob die Meldung fehlerfrei ist (16. bis 17.). Ist dies nicht der Fall, wird der Empfangsspeicher für eine neue Meldung freigegeben und der Interrupt beendet (18. bis 19.). Ist die Meldung fehlerfrei, wird überprüft, ob die Meldung eine Steuermeldung für die Schicht 2 ist (20. bis 21.). Ist dies der Fall, wird der Zustand der Schicht 2 auf einen Anfangszustand zurückgesetzt, der Empfangsspeicher für eine neue Meldung freigegeben und der Interrupt beendet (22. bis 24.). Liegt keine Steuermeldung für die Schicht 2 vor, wird die Meldung zwischengespeichert und der Zeiger "Neue Meldung" wird gesetzt (25. bis 28.). Dann wird der Empfangsspeicher für eine neue Meldung freigegeben und der Interrupt beendet.

Wenn eine Sende-Meldung der Schicht 2 quittiert ist, d.h. die Steuerschaltung 6 hat über den D-Kanal eine Meldung an ein an das S-Bussystem 9 angeschlossenes Gerät gesendet, wird überprüft, ob die Daten fehlerfrei gesendet worden sind (29. bis 32.). Ist dies der Fall, wird der Zeiger "Meldung läuft" zurückgesetzt und der Interrupt beendet (33. bis 35.). Ist die Sendung der Daten nicht fehlerfrei erfolgt, wird der Zeiger "Senden wiederholen" gesetzt und der Interrupt beendet (36. bis 39.).

## Patentansprüche

1. Mobilfunkgerät mit einem Sende- und Empfangsteil (1) zur Verarbeitung von Funksignalen und mit einer Schaltung (2) zur Basisbandverarbeitung, die zur Übertragung von Signalen über ein Bussystem zu einem Bediengerät vorgesehen ist,
dadurch gekennzeichnet, daß die Schaltung (2) zur Basisbandverarbeitung und das Bediengerät über ein nach einem ISDN-Standard arbeitendes Bussystem (9) zur Übertragung von Steuer- und Datensignalen gekoppelt sind.

2. Mobilfunkgerät nach Anspruch 1,
dadurch gekennzeichnet, daß das nach einem ISDN-Standard arbeitende Bussystem als S-Bussystem (9) mit SO-Schnittstellen ausgebildet ist.

3. Mobilfunkgerät nach Anspruch 2,
dadurch gekennzeichnet, daß das Bediengerät einen mit einer SO-Schnittstelle gekoppelten, ersten Sende- und Empfangsbaustein (14) enthält, der über ein erstes geräteinternes Bussystem (16) mit wenigstens einer Umsetzerschaltung (20) zur Analog-Digital-Umsetzung von analogen Sprachsignalen bzw. zur Digital-Analog-Umsetzung von digitalen Sprachsignalen und zur Dekodierung bzw. Codierung von digitalen Sprachsignalen und mit einer ersten Steuerschaltung (17) zur Verarbeitung von D-Kanal-Informationen gekoppelt ist.

4. Mobilfunkgerät nach Anspruch 3,
dadurch gekennzeichnet, daß mit dem ersten geräteinternen Bussystem (16) mindestens ein Terminal-Adapter (21) zur Datenkommunikation gekoppelt ist.

5. Mobilfunkgerät nach einem der Ansprüche 2 bis 4,
dadurch gekennzeichnet, daß mit weiteren SO-Schnittstellen nach dem ISDN-Standard arbeitende Geräte (22, 23) gekoppelt sind.

6. Mobilfunkgerät nach einem der Ansprüche 2 bis 5,
dadurch gekennzeichnet, daß die Schaltung (2) zur Basisbandverarbeitung über einen zweiten geräteinternen Bus (4) mit einem zweiten Sende- und Empfangsbaustein (5), der noch eine Kopplung mit einer SO-Schnittstelle aufweist, und mit einer zweiten Steuerschaltung (6) zur Verarbeitung von D-Kanal-Informationen gekoppelt ist.
